# EUROPEAN PATENT APPLICATION

(11) **EP 2 189 753 A2**
(43) Date of publication of application: **26.05.2010**
(21) Application number: 09460047.5
(22) Date of filing: 12.11.2009
(51) Int. Cl.: G01C 11/06, G01B 5/008

(54) **Assembly stand for mineral cutting head**

(30) Priority: 24.11.2008 PL 38658008; 26.01.2009 PL 38712709; 26.01.2009 PL 38712809
(71) Applicant: Politechnika Slaska, 44-100 Gliwice (PL)
(72) Inventor: Dolipski, Marian, 44-100 Gliwice (PL); Cheluszka, Piotr, 41-800 Zabrze (PL); Sobota, Piotr, 43-190 Mikolow (PL); Remiorz, Eryk, 44-100 Gliwice (PL); Osadnik, Jan, 41-106 Siemianowice Slaskie (PL)
(74) Representative: Ziolkowska, Urszula

(57) **Abstract**

An assembly stand for setting and measuring pickboxes position at the side surface, in particular of working units of mining machines according to the invention is equipped with a manipulator (1) conveniently with 5 degrees of freedom with a gripping device (3), a positioner (4) on which a side surface (6) is seated, a pickboxes storage bin (5) with a feeding and positioning unit, conveniently two high resolution digital cameras (9) and (10) connected in signal with a computer (13) and attached to the base preferably with photographic heads (11) and (12), whit a calibration screen (14) located conveniently behind a positioner (4) and a supply and control unit (2). A supply and control unit (2) is connected in signal with a positioner's control unit (4) and with a pickboxes storage bin (5), and signals from cameras (9) and (10) and from a positioner (4) are transmitted to a computer (13).

The method of setting pickboxes at the side surface, in particular of working units of mining machines, according to the invention, consists in the fact that a storage bin (5) is filled with pickboxes and data is loaded into memory of a central unit of a supply and control unit (2). Data is in form of a set of values of stereometric parameters for each pickbox or a ready generated control program. After starting the stand from a control panel, starting from the first to the last, a pickbox (8) is taken from a storage bin (5) by a manipulator's (1) gripping device (3), a positioner's (4) rotary disc is rotated together with a side surface (6) and a manipulator's gripping device (3) is set in its final position.

A method of measuring pickboxes position at the side surface, in particular of working units of mining machines put into practice between subsequent technological operations of assembling pickboxes for manufacturing quality control or measurement of stereometry of ready mining machines working units according to the invention consists in setting of a positioner's (4) rotary disc in such a position, that a pickbox (7), for which measurement is carried out, was in cameras (9) and (10) field of view and a value of an angle of its rotation in relation to its initial position is read. A device (21) is mounted in a pickbox (7) seat so that the base surface of a mandrel (15) is tangent to a butting face of a pickbox (7). Digital photos of a measured pickbox are taken by both cameras. The photos are processed by a computer in order to determine the position of three characteristic non collinear points of a pickbox that are represented by geometric centres of markers bound to this pickbox. Translational coordinates of these points are evaluated in a global reference coordinate system XYZ, and then values of stereometric parameters that define a pickbox position at the side surface and its spatial setting are evaluated.

## Description

The subject of the invention is an assembly stand and the method of setting pickboxes and measurement of their position at the side surface, in particular, of working units of mining machines that make it possible to automate the process of setting pickboxes at the side surface of working unit of mining machines applied in mining industry, building engineering and highway engineering, equipped with automatic system for contactless measurement of their position for the necessity of interoperational quality control of manufacturing and automation of stereometry measurement of ready working units of mining machines.

The essential working process of mining machines applied in underground and strip mining of raw energy, minerals and rock, building engineering and road work is mining of rock, concrete, asphalt or other materials similar in properties. This process is carried out mainly in principle of cutting with the aid of picks seated in pickboxes welded to the side surface of these machines working units. The number of picks varies from about 20 up to 60 depending on size of a working unit. Picks perform cuts, which depth and cross-sectional area largely depend on picks lay-out (their number and method of arrangement) and motion and force parameters of mining machine. As a result stereometry of a working unit decides to a large extent about efficiency and productivity of mining process, its energy-consumption and intensity of picks wear. Moreover, it has an influence on picks load state as well as quantity and character of load of main subassemblies of a mining machine, including first of all a mining unit, which decides to a large extent about durability and reliability of machines of this type.

Manufacturing process of mining machines working units reduces to positioning, in accordance with technical documentation, pickboxes at the right place at the side surface of working units and their proper spatial setting. It is implemented with the application of various kinds of devices. At this stage pickboxes are preliminarily fastened (tacked) at the side surface of a working unit, and at the next stage of manufacturing process they are permanently fastened at the side surface (welded).

The essential part of this process is performed by inspection of conformity of pickboxes position and setting with technical documentation at each production stage of working units of mining machines, in particular during tacking and after final welding. Assembling errors and welding stresses might be the reason for large discrepancies between actual and nominal pickboxes setting. It might result in abnormal operation of working units and lead to low mining machine effectiveness, overload of their drives and unwanted vibrations, excessive power consumption and consumables and finally increased failure frequency. Correctness inspection of pickboxes setting reduces to measurement of working units stereometric parameters, that makes collection of quantities that describe their lay-out at the side surface and spatial setting of each pickbox. The measurement of stereometric parameters of mining machine working unit brings to determination of values of at least six geometric parameters for each pickbox fastened to it. Many a time the number of pickboxes in which working units of mining machines that are equipped with is large, therefore process of setting pickboxes at the side surface as well as testing their position is complicated and is characterized in many cases by extremely high labour and time consumption.

Known from polish patent description no. PL 163 510 device for assembling pickboxes on shearers' cutting drums, which is equipped with system of arms traveling in horizontal plane and vertical one as well as travelling holders equipped with a tip for appropriate setting of an arranged pickbox. The arms are equipped with linear scale that enables manual setting of a pickbox coordinates at the side surface of a cutting drum. Pickboxes spatial setting is implemented in this kind of devices with the application of protractors installed in a travelling holder and articulated clamping of a tip on which an assembled pickbox is put. Position of a pickbox on a perimeter of a working unit side surface is set up with the application of a rotary head connected with a device footing, fastened centrally at the side surface.

Moreover, there are known for example from polish patent description no. PL 142 924, devices as templates in form of stand (mounting plate) placed in a plane parallel to the axis of rotation of a side surface, in which many holes are made. A tip equipped with a mandrel is fastened in a hole and assembled pickbox is seated on the mandrel. To make it possible to fasten pickboxes on the whole perimeter of a side surface of cutting head or cutting drum the assembling device is additionally equipped with a dividing head, that makes it possible to rotate a disc with fastened side surface in relation to the device basis.

Pickboxes assembling process with utilization of this kind of devices is characterized by high labour and time consumption that arises from necessity of their manual operation, especially in the case of high number of pickboxes. For each pickbox, after learning from technical documentation (a figure or a table) the values of parameters that describe its position and spatial setting, it is needed to manually set suitable working elements of the device in the position according to values of the parameters. Particular attention is required while doing these operations as well as constant monitoring of correctness of pickboxes assembling process. When the number of pickboxes is high it is indeed easy to make a mistake. Moreover, in case of some solutions it is necessary to make some extra elements of an assembly stand (a stand and tips) for a mining machine working unit with designated stereometry. It elongates significantly preparation time of production technology. A manufacturer of this kind of working units has to have many sets of such replaceable elements, each adjusted to specific stereometry.

Measurement of mining machines working units stereometry has been achieved so far by determination of the spatial coordinates (cylindrical or Cartesian system) of a tip of pick's spike bound to the considered pickbox and three characteristic angles that describe spatial setting of pick's longitudinal axis and symmetry plane of the pickbox.

There are known stands that consist of a rotary table which is motor-driven or driven by hand on top of which working unit is fastened and a coordinate machine with variety of designs. In most cases a measuring device consists of a set of two arms travelling in horizontal and vertical plane. One arm is equipped with a properly shaped measuring tip, which during measuring process is in contact with a point that represents position of a pick's spike tip bound to a considered pickbox. The device's arms are equipped with rulers that allow reading the position of a measuring tip in two mutually perpendicular directions, or sensors included in electronic measurement system that allow digital reading of values of measured parameters (coordinates), their processing and archiving.

Obtained that way values of pick's spike tip coordinates in connection with current position of working unit read with the aid of a protractor which is an integral part of a rotary table or an electronic measurement system as a result allow to determine - directly or on basis of an adequate transition function - values of parameters that characterize setting of a particular pickbox at the side surface of a mining machine working unit.

Measurement of angles that determine spatial setting of particular pickboxes with the aid of known measuring stands is an extremely difficult process. Mechanically complex devices equipped with protractors or rotary sensors are very often utilized in this case. Devices can be a part and parcel of a coordinate machine's measuring head or can be a separate element used independently from the machine. High density of pickboxes on a small area of a side surface cause difficulties with measurement of angles of pickboxes settings and affects negatively accuracy of measurement results.

Measuring stands and methods used so far allow measuring of mining machines working units stereometry exclusively using contact methods, that consist in measuring demanding quantities by physical contact during the process between measuring head and a pickbox or some elements bound to it (e.g. a mandrel in its seat). For the sake of high number of pickboxes welded at a side surface the measuring process of mining machines working units stereometry with the application of measuring stands used so far is characterized by high time and labour consumption, because it requires physical contact between measuring tip and measured point (the tip of pick's spike) for each successive pickbox and assembling of a measuring device (a measuring head) for each successive pickbox in order to measure angles and its spatial setting.

An assembly stand, according to the invention, is equipped with a manipulator advantageously with 5 degrees of freedom with a gripping device, a positioner on which a working unit side surface is fastened, a pickboxes storage bin with a feeding and positioning unit, favourably two digital high resolution cameras connected in signal to a computer and attached to a base beneficially with the aid of photographic heads, a calibration screen located advantageously behind a positioner and a supply and control unit. A supply control unit connected in signal to a positioner control system and a pickboxes storage bin, and signals from digital cameras and a positioner are transmitted to a computer.

A gripping device of a manipulator has a mandrel, on which a being seated pickbox is put. A pickbox's longitudinal axis determines the direction of longitudinal axis of a pickbox's seating. A butting face of a pickbox is distant from the central point of a gripping device for quantity that results from feeding picks from pickboxes on such a way that the position of the central point and a gripping device's mandrel setting for its established final position arises from assigned to a pickbox values of stereometric parameters.

A calibration screen is in a form of set of points beneficially in a form of rings creating nods of a rectangular square grid. Dimensions of the grid and the number of nodal points result from assumption of size of both cameras eyeshot. The calibration screen is located in a plane perpendicular to the longitudinal stand axis. The bottom grid line of a calibration screen is located at such height in relation to the basis plane to allow both cameras to see all nodal points lying on this line. The geometric center of a calibration screen is placed in the plane perpendicular to the basis plane crossing the longitudinal stand axis.

For purposes of measuring working units stereometry the assembly stand is equipped with a device, which is composed with a cylindrical mandrel with a diameter equal to a diameter of a pickbox's seat and two bars fastened to a mandrel so that one of them lies along the longitudinal mandrel axis, and the second is located perpendicularly to it. Three markers representing characteristic points of a pickbox are located on these bars.

The method of setting pickboxes at the side surface, according to the invention, consists in the fact that a storage bin is filled with pickboxes and data is loaded into memory of a central unit of a supply and control unit. Data is in form of a set of values of stereometric parameters for each pickbox or ready generated control program. After starting the stand from a control panel, starting from the first to the last, a pickbox is taken from a storage bin by a manipulator's gripping device, a positioner's rotary disc is rotated with the side surface, and a manipulator's gripping device is set in its final position. By that the pickbox held by a gripping device is put at the side surface as results from values of stereometric parameters assigned to it. The values of coordinates of gripping device final position and angle of rotation of a positioner's rotary disc are designated using an applicable transition function. With the aid of a storage bin's feeding and positioning unit the successive pickbox is fed to the position, where it is collected from by a manipulator's gripping device.

A method of measuring pickboxes positions at the side surface of particularly mining machines working units is put into practice between successive technological operations of assembling pickboxes for manufacturing quality control or measurement of stereometry of ready mining machines working units consists in setting of a positioner's rotary disc in such position, that a measured pickbox is in cameras field of view and a value of an angle of its rotation in relation to its initial position is read and a device is fastened in a pickbox seat so that a base surface of its mandrel is tangent to a butting face of a pickbox, and the longitudinal axis of a bar lies at a pickbox symmetry plane. Both cameras take digital photos of a measured pickbox. The photos are processed by a computer in order to determine a position of three characteristic non collinear points of a pickbox that are represented by geometric centres of markers bound to a pickbox. Translational coordinates of points are evaluated in global reference coordinate system XYZ, and then values of stereometric parameters that define a pickbox position at the side surface and its spatial setting are evaluated. For this purpose position of characteristic points of a working unit pickbox is determined in three dimensional space of an assembly stand. First, digital (raster) images of markers representing measured points are acquired. These images are recorded by cameras in hard drive files. Then the identification process of the position of mapping markers midpoints is carried out on the plane of each image from the left and the right camera. Their position is evaluated in pixels and then in unit of length with the aid of an adequate transition function. After that the spatial position of a pickbox characteristic points are evaluated as a result of determination of values of translational coordinates markers geometric centres in the reference coordinate system of the assembly stand.

At the stage of starting an assembly stand and in order to periodic examination of measurement precision, calibration with the aid of a calibration screen is carried out separately for the left camera and for the right one. It consists in determination of values of coefficients of transition function between coordinates of points in raster images of test space acquired from digital cameras and real coordinates in metric system. The first calibration of an assembly stand contains determination of calibration polynomials degree and determination of position of calibration screen grid control points that are taken into consideration at the stage of evaluation transition function coefficients for the reason of minimization of maximal deviation of calibration screen grid nodal points positions in the planes of images acquired from both digital cameras. The assumption is made at the same time that the deviation cannot be bigger than the specification limit. At the next stage values of spatial coordinates of all calibration screen grid nodal points are verified and the value of maximal measuring error of the assembly stand measuring unit is estimated.

The invention allows to replace a manually operated assembly device by an industrial robot coupled by control circuitry with a positioning unit of a positioner's rotary disc, on which a mining machine working unit side surface is seated during pickboxes setting. The assembly stand, according to the invention, allows on the one hand possibility of assembling pickboxes at the side surface of different shapes and sizes for any picks lay-outs differ in number of pickboxes, their arrangement and spatial setting. On the other hand the developed method of measuring working units stereometric parameters allows simple and fast determination with required measuring accuracy of pickboxes spatial position at the side surface at any stage of their manufacturing process contributing to high simplification of measuring procedure because of the abandonment of physical contact between measuring devices and a measured object.

Moreover, the advantage of the solution according to the invention is high flexibility and universality of the assembly stand in the range of feasibilities of setting pickboxes and measuring their position at the side surface of roadheaders' cutting heads, shearers' cutting drums or working units of mining machines employed in building engineering and highway engineering with different stereometry and size that arise from technical potential of applied equipment. Advantageous is also the fact, that time between the end of designing process of system of picks and the beginning of setting pickboxes is here reduced to minimum thanks to elimination of preparatory operations connected for example with assembly stand adaptation for the need of implementation of specified picks setting. Significant reduction of human factor influence on the run of the process of setting pickboxes in connection with regular examination (measurement) of pickboxes setting correctness contributes to meaningful increase of accuracy and repeatability of mining machines working units production and significant contraction of time of setting pickboxes on their side surfaces.

The advantage is also abandonment of noxiousness direct measurement of angles that determine spatial setting of each pickbox, and because of that simple structure of measuring system for the sake of lack of necessity of using repeatedly mechanically complicated and expensive measuring devices. Measuring devices are in this case distant from a measured object. Thanks to it free access to a measured object is possible. Measuring devices are not endangered to damage caused for example during bringing to the space of an assembly stand a working unit side surface which is characterized by high mass and often big size, or during pickboxes assembling process (their welding). Contactless character of measuring process also simplifies measuring procedure, and application of highly efficient software results in significant contraction of time of measuring values of interesting quantities and automation of this process. Process of processing measured data (determination of stereometric parameters values on the basis of an adequate transition functions) might, but doesn't have to be implemented directly at the assembly stand, because the necessary information (digital images) might be transferred by magnetic or optical carriers into any computer with installed software dedicated to their analysis.

The subject of the invention is shown at the example of implementation in figure, where fig. shows main view of an assembly stand for setting and measuring pickboxes position for shearer's cutting head, fig.2 - view of a device for identifying characteristic points of a pickbox, fig.3 - shows method of mounting a device in a pickbox seat during measurement, fig.4 - presents coordinates that describe position of pick's spike located in a pickbox at the side surface of a mining machine working unit, fig.5 - angles that characterize spatial setting of a pickbox, fig.6 - an algorithm for measurement of a mining machine working unit stereometric parameters, and fig.7 - an algorithm for determination positions of a pickbox characteristic points.

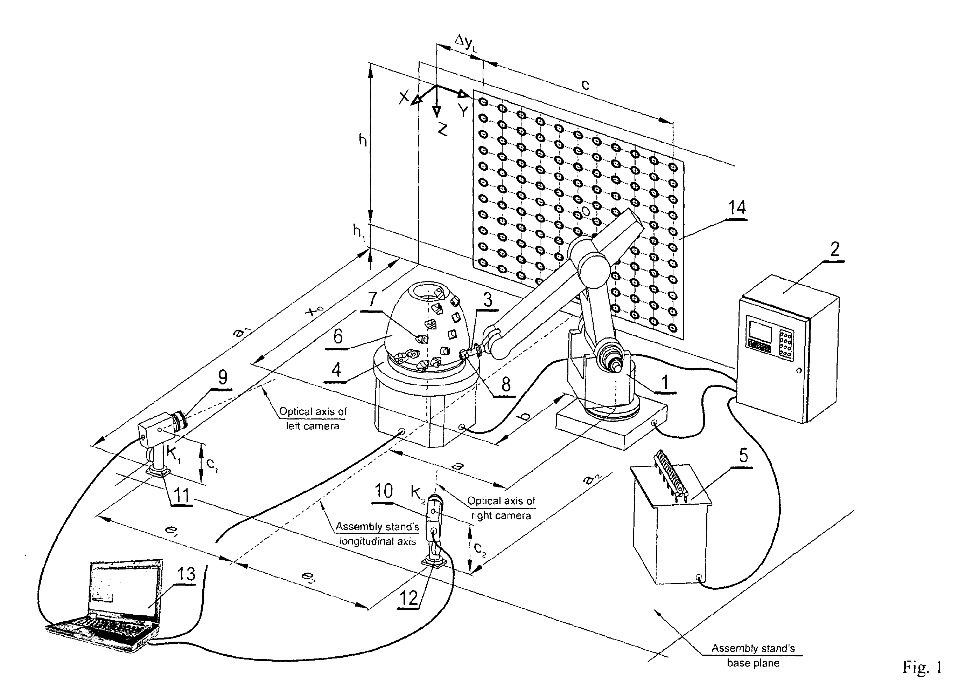

The stand is made up of (fig. 1): a manipulator 1 profitably with 5 degree of freedom equipped with a gripping device 3, a positioner 4, a pickboxes storage bin 5, two industrial digital high resolution cameras: left 9 and right 10 coupled with a computer PC 13, a calibration screen 14 and a supply and control unit 2.

A positioner 4 is equipped with a rotary disc driven favourably by an electric motor, and its position (angle of rotation) is monitored for example by an encoder connected to a computer 13 and a central unit of a supply and control unit 2. A pickboxes storage bin 5 is a separate device for pickboxes warehousing, equipped with a feeding and positioning unit, which task is to set successive pickboxes in adequate starting position in a place, where they are taken from by a gripping device 3 of a manipulator 1. A supply and control unit 2 is connected to a positioner's control system 4 and a pickboxes storage bin 5. In this way the system controls positioner's work and monitors readiness of a storage bin. The state of readiness of a storage bin indicates that a pickbox is set in appropriate starting position and might be taken by a manipulator's 1 gripping device 3. Emptying a storage bin that makes running the process of setting pickboxes impossible to carry on results in holding up a running control program.

The position of axis of rotation of a positioner's rotary disc 4, which overlaps with the axis of rotation of placed on it working unit side surface 6 is specified in relation to the manipulator's axis of rotation with the aid of distances: a and b. The distances are chosen to make it possible to put the mining machine working unit side surface with designed minimal and maximal overall dimensions in manipulator's workspace in such a way, that it is possible to set pickboxes in everywhere at the side surface for both left working unit (as at the example of completion) and right working unit - that is a reflection of a left working unit in a plane transiting its axis of rotation.

Cameras 9 and 10 are coupled in signal through suitable links and interfaces with a computer 13*,* which controls them during the measurement process of working unit stereometry, it also backups and processes acquired measuring signal (raster images). Because setting of cameras in relation to a positioner 4 must be characterized by high accuracy, they are mounted to the base of an assembly stand through precision stands, favourably as photographic heads 11 and 12. These elements enable precise setting of cameras' optical axes and precise reading of values of angles determining the setting. The elements, apart from high precision of the camera deflection mechanisms, must be characterized, at the same time by high stability and reliability of fastening.

A camera spatial arrangement in an assembly stand is determined by the position of their focal points (points: K₁ and K₂). In the case of left camera 9, the position of this point is defined by distance: a₁ - measured in the direction parallel to longitudinal axis of the assembly stand (along the X axis of accepted global coordinate system XYZ), c₁ - measured in vertical direction (along the Z axis), and e₁ - which is the distance between the focal point of this camera and longitudinal axis of the assembly stand, measured in the direction parallel to the Y axis. The position of focal point of the right camera 10 is determined in the same way (point K₂). In this case the position of this point is characterized by distances: a₂, c₂ i e₂. The setting of cameras optical axes (fig.1 - dot lines), transiting through their focal points K₁ and K₂ is defined, in turn, by two angles:
- the camera angle of rotation at the plane of an assembly stand base,
- the camera angle of deflection at the plane perpendicular to an assembly stand base.

The arrangement and spatial setting of both cameras are carefully chosen so that ensures the possibility of data logging of the same (best all) nodal points of a calibration screen grid 14 and it was possible to measure the mining machine working unit stereometry with maximal established dimensions. The values of parameters that describe this arrangement and setting depend on the angle, that determine size of the field of cameras view, that results from lenses structure and the diagonal length of applied photosensitive matrixes (optical sensors).

An assembly stand is equipped with a calibration screen 14 with width c and height h, used for measurement system calibration in phase of its starting and for periodical examination and possible calibration adjustment in order to preserve expected measurement accuracy. A screen is located behind a positioner at the plane perpendicular to longitudinal axis of an assembly stand and is distant from the axis of rotation of a positioner's rotary disc 4 for a distance x₀, which allows convenient access to it. The lowest line of a calibration screen grid is located at the height h₁ in relation to the plane of an assembly stand base, such that nodal points lying on this line were seen by both cameras. The geometric centre of a calibration screen (point O) lies in the plane perpendicular to the plane of an assembly stand base, transiting its longitudinal axis. A calibration screen as an exemplary embodiment is a set of 121 points located in 11 rows and 11 columns. These points create nods of a rectangular square grid with a side equal 100 mm. In order to accurate identification of this grid nods the intersection points of vertical and horizontal lines are marked with rings with a diameter of φ50/30 mm. A calibration screen dimensions, in that it is its width c and height h, as well as the number of grid nodal points depend on that of required size of both cameras field of view.

A mining machine working unit side surface 6 is fastened on a positioner's rotary disc 4. Fig. presents the situation in which a pickbox 7 had been fastened earlier and a pickbox 8 is the one being set at its side surface. A manipulator's 1 gripping device 3 is equipped here with a mandrel, on which a being set pickbox 8 is mounted in a set-up position. The direction of longitudinal axis of a gripping device 3 and the angle of its rotation around this axis determines a pickbox 8 spatial setting.

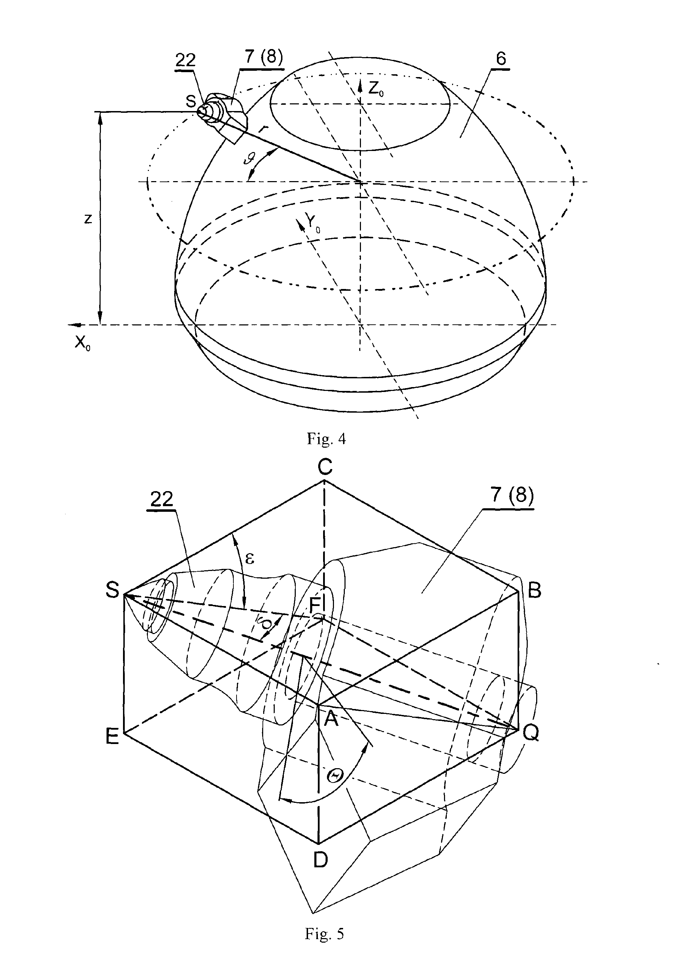

A pickbox position in space of an assembly stand is defined by spatial position of a gripping device central point (point S) that represents the position of a pick's spike connected with a pickbox being set. At the same time this point is distant from a pickbox butting face for a quantity 1ₙ that results from feeding the pick from a pickbox. Spatial setting of a pickbox results from direction of longitudinal axis of a pick connected with it, that determine the direction of longitudinal axis of griping device's mandrel 3 (fig.5 - line SQ) and the value of an angle of a griping device 3 rotation around this axis. The final position of a gripping device central point is defined in a reference coordinate system connected with a working unit X₀Y₀Z₀ based on cylindrical coordinates of a pick's spike connected with a considered pickbox: r, 9, z (fig.4). The spatial setting of a pickbox might be defined by three angles (fig.5): δ, ε, Θ, in a reference coordinate system determined by three mutually perpendicular planes, that is: a plane of rotation (ABCS) - perpendicular to the working unit axis of rotation (axis Z₀ - fig.4), a plane of attack (ADES) - assigned by the working unit axis of rotation and a pick's spike tip connected with a considered pickbox (point S) and a plane of clearance (CFES) - transiting a pick's spike tip (point S).

Achieving specified position of a considered pickbox reduces to the proper setting of a manipulator's 1 gripping device 3 and a positioner's 4 rotary disc. In the positioner's and manipulator's internal coordinate system position of its individual elements is determined by using configuration angles. Values of these angles are determined with the aid of proper transition functions on the basis of values of stereometric parameters that describe point S position (coordinates: r, ϑ, z) and the setting of a given pickbox (angles: δ, ε, Θ).

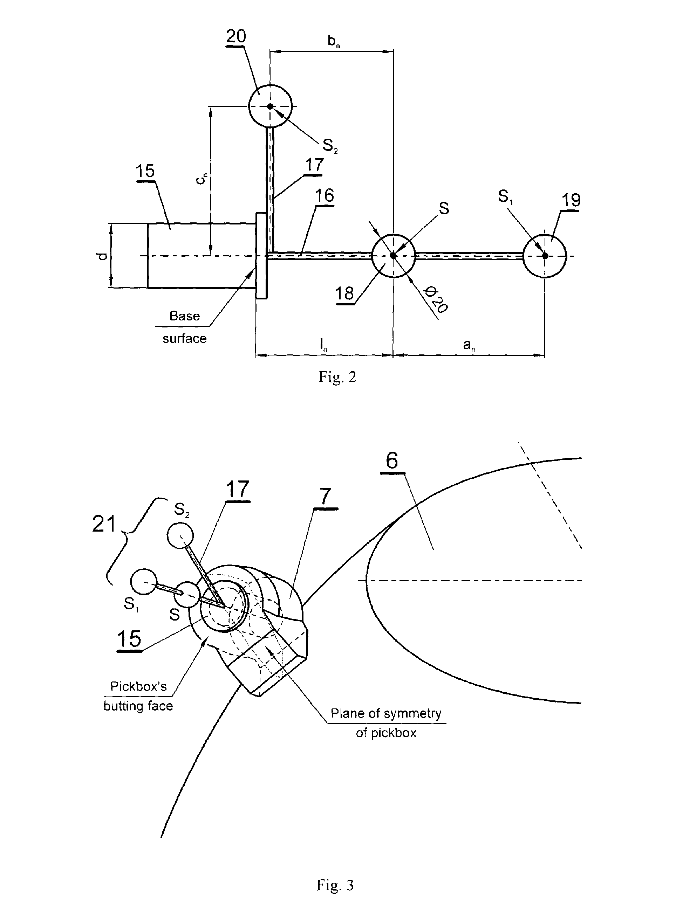

Determination of pickboxes setting at the mining machine working unit side surface by measuring is reduced in turn to determination for each of these, the values of six parameters mentioned above: r, ϑ, z and δ, ε, Θ. They are determined here based on the measurement of three non collinear translational coordinates of a pickbox in 3D space assigned by axes of global reference coordinate system XYZ of an assembly stand (fig.1). These points are located at the symmetry plane of a pickbox as follows (fig.3):
- point S - represents the position of a pick's spike tip connected with a considered pickbox,
- point S₁ - lies on the extension of the longitudinal axis of a pick,
- point S₂ - lies on the straight line perpendicular to the longitudinal axis of a pick.

Measuring points: S, S₁ i S₂ are represented by markers' midpoints that are part and parcel of a device 21 mounted at the measurement time in a pickbox's seat 7 (fig.3) in the place of a pick 22. In the exemplary embodiment this device has a cylindrical mandrel 15 with a diameter of d equal to the diameter of a pickbox's seat (fig.2), through which it is seated in a pickbox. Two bars: 16 and 17 are attached to a mandrel 15. A bar 16 is fastened axially to a mandrel 15*,* so that its longitudinal axis determines the longitudinal axis of a pick. A bar 17 is fastened perpendicularly to a bar 16. There are two markers 18 and 19 seated on a bar 16. They are in the exemplary embodiment in a form of sphere with a diameter of 20 mm. The midpoint of the first of them (point S) is located at the distance of In from the base surface of a mandrel 15, tangent to a pickbox butting face. The midpoint of marker 19 (point S₁) is distant from the midpoint of marker 18 for a quantity aₙ. The third marker in a form of sphere 20 is fastened to a bar 17 at its end. The midpoint of this marker (point S₂) is displaced from the longitudinal axis of a bar 16 for a quantity cₙ, and its distance from point S measured in direction of this axis equals bₙ. Values of parameters: aₙ, bₙ and Cₙ are carefully chosen so that spacing between individual points is possibly big, which is beneficial because of measurement accuracy. In the exemplary embodiment these distances are as follows: aₙ = 70 mm; bₙ = 57 mm, Cₙ = 70 mm, and lₙ = 63 mm.

A mandrel 15 of a device 21 is mounted in the measurement time in a pickbox 7 seat in such a way, that its base surface is tangent to a pickbox butting face, and the bar 17 longitudinal axis lies on a pickbox symmetry plane (fig.3). In this way, the midpoints of individual markers (points S, S₁ i S₂) unambiguously determine the spatial setting of a pickbox defining the direction of its symmetry plane.

The method of setting pickboxes consists in the fact that the mining machine working unit side surface 6 is fastened on a positioner's rotary disc 4 and a storage bin is filled with pickboxes with the number and type in accordance with working unit technical documentation. Then data is entered to the memory of a supply and control unit's 2 CPU. Data is in form of a set of values of stereometric parameters of individual pickboxes or a ready generated control program. After starting a stand from a control panel, beginning from the first to the last pickbox, a manipulator 1 collects by a gripping device 3 from a storage bin 5 a pickbox 8, a positioner's rotary disc 4 is rotated together with a side surface 6 and a manipulator's gripping device 3 is set to its final position that makes it possible to locate the hold by it pickbox 8 at the side surface 6 as results from assigned to it values of stereometric parameters. At the same time, by a feeding and positioning unit of a storage bin 5 a successive pickbox is fed to a place, from which it is taken by a manipulator's 1 gripping device 3.

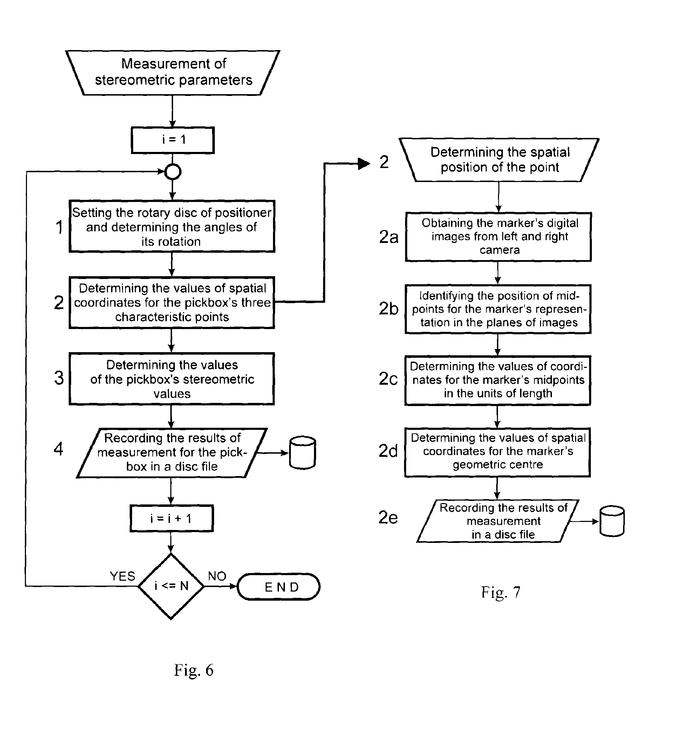

The method of measuring position of a pickbox at the side surface, in particular mining machines working units at an assembly stand between successive technological operations for quality control of their production, or stereometry measurement of ready working units relies on the fact that for individual pickboxes fastened at the working unit side surface a positioner's rotary disc 4 is set in such a position, that a pickbox 7, for which the measurement is carried out was in the field of view of both cameras 9 and 10 and the value of angle of its rotation in relation to its starting position is read (fig.6). A device 21 is inserted into a pickbox. It is equipped with markers representing its three characteristic points, and then digital photos are taken by both cameras. Next the photos are digitally processed by a computer. Based on computer analysis of images recorded by these cameras, positions of three characteristic points of a pickbox are evaluated. They are represented by geometric centres of markers connected with this pickbox. Positions of these points are described by translational coordinates of a global reference coordinate system XYZ of an assembly stand. Coordinates of these three points form the basis for determination with the support of adequate transition functions values of stereometric parameters that define location at the side surface and spatial setting of a measured pickbox. Afterwards measurement results are saved into a disc file, so their subsequent use is also possible.

This procedure is repeated for all pickboxes of which a working unit is equipped with (i = 1, ..., N), or for their selected group.

Determination of spatial position of a pickbox characteristic points reduces to determination of values of spatial coordinates of geometric centres of markers representing these points. Essentially, measuring procedure consists of, for each of them, four basic stages (fig.7). The first of them is acquiring digital images of a given marker, taken by both cameras. Then raster images saved to disc files are processed for identifying on individual images positions of midpoints representing markers at the plane of these images. After identification of position of midpoints of a considered marker images from left and right camera (coordinates of these points were evaluated in pixels), values of their coordinates in length units are evaluated. Transition functions specified at the stage of an assembly stand calibration are used for this purpose.

The final stage of the procedure of determination of spatial position of a pickbox characteristic points is determination of values of coordinates of their geometric centres in relation to axes of a reference coordinate system XYZ. At the end the results of calculations are saved in a disc file.

At the stage of starting an assembly stand and for periodical check of accuracy of developed method of measurement its calibration is carried out. Calibration consists in determination of values of coefficients of a transition function between coordinates of raster images points in measuring space obtained from digital cameras and real coordinates - in metric system.

The procedure of a measurement system calibration must be carried out separately for the left camera 9 and the right camera 10. The first its calibration includes two aspects, namely: determination of calibration polynomials degrees and determination of position of a calibration screen grid control points taken into account at the stage of determination of transition functions coefficients values for the sake of minimization of maximal deviation of a calibration screen nodal points position at the planes of images obtained from both digital cameras (Δₘₐₓ), with the assumption that value of this deviation can not be bigger than acceptable value (Δ_{dop}).

After determining for both cameras values of calibration polynomials coefficients due to the above-mentioned criteria and after their saving in a configuration file in a computer's hard drive, a checking procedure is performed, that consists in determination of values of all calibration screen nodal points spatial coordinates. Because their real values are known, it is possible in this way to assess the value of maximal deviation of an assembly stand measuring system.

## Claims

1. An assembly stand for setting and measuring pickboxes position at the side surface, in particular, of working units of mining machines **characterised by the fact that** it is equipped with a manipulator (1) conveniently with 5 degrees of freedom with a gripping device (3), a positioner (4) on which the side surface (6) is seated, a pickboxes storage bin (5) with a feeding and positioning unit, conveniently two high resolution digital cameras (9) and (10) connected in signal with a computer (13) and attached to the base preferably with photographic heads (11) and (12), with a calibration screen (14) located conveniently behind a positioner (4) and a supply and control unit (2), whereas a supply and control unit (2) is connected in signal whit a positioner's control unit (4) and with a pickboxes storage bin (5), and signals from cameras (9) and (10) and from a positioner (4) are transmitted to a computer (13).

2. A stand according to the claim 1 **wherein** a gripping device (3) features a mandrel on which an adjustable pickbox (8) is seated, with its longitudinal axis (SQ line) determining the direction of the longitudinal axis of the pickbox (8) socket, and the pickbox (8) face is away from the gripping device's (3) central point S by the value resulting from the extension of picks from pickboxes, so that the position of the central point S and the setting of the gripping device (3) mandrel for its determined final position results from the stereometric parameters assigned to the pickbox (8).

3. A stand according to the claim 1 **wherein** the calibration screen (14) is a set of points, conveniently, in form of rings forming nodes of a rectangular, quadrangle grid with dimensions and the number of nodal points resulting from the assumed size of both cameras' viewing field, whereas the calibration screen (14) is situated in the plane perpendicular to the assembly stand's longitudinal axis in such a manner that the line of the calibration screen (14) situated at the very bottom is situated at such height in relation to the base plane, so that the nodal points lying on such line were seen by both cameras, and the geometric centre of the O calibration screen is lying in the plane perpendicular to the base plane going through the stand's longitudinal axis.

4. A stand according to the claim 1 **wherein** it is equipped with a device (21), comprised of a cylindrical mandrel (15) with the diameter equal to the pickbox socket (7) diameter and two bars (16) and (17) that are attached to the mandrel (15) in such a manner that the bar (16) is lying along the mandrel's (15) longitudinal axis, and the bar (17) is situated perpendicularly to it, on which three markers are seated (18), (19) and (20), and two of them - marker (18) and (19) are arranged along the bar (16), in such a way that the centre of the marker (18) is representing the vertex of the pick's spike tip S, and the centre of the marker (19) is representing point S₁ and is lying at the extension of the pick's longitudinal axis, and the marker (20) is seated at the end of the rod (17), so that its centre is mapping point S₂.

5. The method of setting pickboxes at the side surface, in particular, of working units of mining machines **wherein** the storage bin (5) is filled with pickboxes and data is loaded into memory of the central unit of the supply and control unit (2) in form of a set of parameters of stereometric values for the each pickbox, or a ready, generated control program, in such a way that after starting the stand from the control panel, starting from the first to the last pickbox, a pickbox (8) is taken from the storage bin (5) by the manipulator's (1) gripping device (3), the rotating disc of the positioner (4) is rotated with the side surface (6) and the gripping device (3) of the manipulator is set in the final position, and hence the pickbox (8) is placed held by the gripping device (3) on the side surface (6) in a way as defined by the stereometric parameter values assigned, and the coordinate values for the gripping device (3) in the final position and the angle rotation of the rotary table's positioner (4) is determined using relevant transition functions and another pickbox is supplied with the storage bin's (5) feeding and positioning unit to the place where it is collected by the gripping device (3) of the manipulator (1).

6. The method of measuring pickboxes position at the side surface, in particular, of working units of mining machines performed between subsequent technological operations of assembling pickboxes for manufacturing quality control, or for measuring the stereometry of ready working units of mining machines **wherein** the rotating disc of the positioner (4) is set in such position so that the pickbox (7), for which a measurement is taken is present within the viewing field of the cameras (9) and (10) its angle of rotation in relation to the initial position is read and the device (21) is mounted in the pickbox seat so that the base surface of the mandrel (15) is tangential to the pickbox's (7) butting face, and the longitudinal axis of the bar (17) is lying in the plane of symmetry of the pickbox, and next, digital photos of the measured pickbox are taken by both cameras and they are next processed in a computer so that the position of three characteristic non-collinear points are determined on their basis for the pickbox: S, S₁ and S₂, represented by the geometric centres of markers related to this pickbox, and the translation coordinates of such points are determined in the global XYZ reference coordinate system and next the values of stereometric parameters are determined specifying the pickbox location at the side surface and its spatial arrangement.

7. The method of measuring according to claim 6 **wherein** the position of the pickbox's (7) characteristic points in three-dimensional space of the assembly stand is determined, where first the digital (raster) images of the markers representing the points being measured and recorded with the cameras are obtained and stored in disc files, and then the position of centre points are identified on the individual images representing the markers in the plane of images from the left and right camera, so that their position is identified expressed in pixels, and further - in the units of length by means of relevant transition functions, and the position of the characteristic pickbox points is determined in the space by determining the values of the translation coordinates for the geometric centres of such markers in the reference system of the XYZ assembly stand.

8. The method of measuring according to claim 6 **wherein** calibration is carried out at the stage of starting the assembly stand and for checking periodically the accuracy of measurement using the calibration screen (14), separately for the left camera (9) and right camera (10), where calibration consists of determining the value of transition function factors between the coordinates of raster image points of the measuring space obtained from the digital cameras and the actual coordinates - in the metric system, whereas the first measuring stand's calibration includes the identification of the degree of calibration polynomials and the identification of the position of control points for the calibration screen's grid considered at the stage of determining the transition functions' factors due to the minimisation of the maximum position error for the calibration screen grid's nodal points (14) in the planes of the images obtained from both digital cameras (Δₘₐₓ), assuming that the error must not be greater than the permitted value (Δ_{dop}), and next the values are verified of spatial coordinates for all the nodal points of the calibration screen's grid and the values of the maximum measurement error of the assembly stand are assessed.
